# EUROPÄISCHE PATENTSCHRIFT

(11) **EP 1 465 747 B1**
(45) Veröffentlichungstag und Bekanntmachung des Hinweises auf die Patenterteilung: **07.02.2007**
(21) Anmeldenummer: 03701470.1
(22) Anmeldetag: 07.01.2003
(51) Int. Cl.: B23K 26/06

(54) **LASERBEARBEITUNGSVORRICHTUNG**
LASER MACHINING DEVICE
DISPOSITIF D'USINAGE PAR LASER

(30) Priorität: 16.01.2002 DE 10201476
(43) Veröffentlichungstag der Anmeldung: 13.10.2004
(73) Patentinhaber: Hitachi Via Mechanics, Ltd., Ebina-Shi Kanagawa 243-0488 (JP)
(72) Erfinder: MAYER, Hans, Jürgen, 68519 Viernheim (DE)
(74) Vertreter: Beetz & Partner
(86) Internationale Anmeldenummer: PCT/DE2003/000019
(87) Internationale Veröffentlichungsnummer: WO 2003/059567

(56) Entgegenhaltungen:
- EP-A- 0 299 702
- DE-A- 19 955 383
- DE-A- 19 959 862
- PATENT ABSTRACTS OF JAPAN vol. 2000, no. 10, 17. November 2000 (2000-11-17) & JP 2000 190087 A (SUMITOMO HEAVY IND LTD), 11. Juli 2000 (2000-07-11) in der Anmeldung erwähnt

## Beschreibung

Die Erfindung betrifft eine Vorrichtung zum Bearbeiten von Objekten mittels Laserstrahlen gemäß dem Oberbegriff des Anspruchs 1, siehe JP-A-2000 190087

Laserbearbeitungsmaschinen verwenden heutzutage häufig zwei oder auch mehrere verschiedene Laserstrahlen, die unabhängig voneinander auf das zu bearbeitende Objekt gelenkt werden. Zur Erzeugung der verschiedenen Laserstrahlen sind nicht unbedingt mehrere verschiedene Laserlichtquellen erforderlich. Es genügt auch der von einem einzigen Laser ausgesandte Laserstrahl, der beispielsweise mittels eines Strahlteilers in mehrere Teilstrahlen aufgespalten wird, die danach auf das zu bearbeitende Objekt gelenkt werden können.

In vielen Fällen werden verschiedene Wellenlängen von Laserlicht verwendet um insbesondere verschiedene Materialien mit einer hohen Genauigkeit bearbeiten zu können. Zur Erzeugung von zwei oder mehreren unterschiedlichen Wellenlängen von Laserlicht werden üblicherweise zwei oder mehrere Laserlichtquellen verwendet. Alternativ kann auch ein einziger Laser verwendet werden, wobei der von diesem Laser ausgesandte Strahl durch die Verwendung von Strahlteilern in zumindest zwei Teilstrahlen aufgespalten wird und zumindest einer der beiden Strahlen durch einen nichtlinearen optischen Effekt (insbesondere einer sog. Frequenzvervielfachung) in seiner Wellenlänge verändert wird. Auf diese Weise können ebenso wie bei der Verwendung von zwei Laserlichtquellen mittels einer einzigen Laserlichtquelle zwei unterschiedliche Teilstrahlen erzeugt werden, wobei die spektrale Verteilung des einen Teilstrahls relativ zu der spektralen Verteilung des anderen Teilstrahls unterschiedlich ist.

Die gleichzeitige Verwendung von einem kurzwelligen Laserstrahl und einem langwelligen Laserstrahl ist insbesondere bei der Laserstrukturierung und dem Laserbohren von mehrschichtigen Leiterplatten erforderlich. Dabei können beispielsweise mittels des kurzwelligen Laserlichts, welches zudem in möglichst kurzen Laserpulsen auf das zu bearbeitende Objekt trifft, dünne Metallschichten abgetragen werden, welche sowohl auf der Oberfläche als auch im Inneren der mehrschichtigen Leiterplatten ausgebildet sind und welche verschiedene nichtleitende Schichten voneinander trennen. Das langwelligere Laserlicht wird dazu verwendet, um diese nichtleitenden Zwischenschichten präzise abzutragen. Auf diese Weise können beispielsweise Löcher mit einem Durchmesser von 20 µm oder weniger erzeugt werden, so dass durch eine nachfolgende Metallisierung eines lasergebohrten Lochs bestimmte metallische Zwischenschichten auf extrem kleinem Raum elektrisch leitend miteinander verbunden werden.

Die Laserbearbeitung mittels zwei unterschiedlichen Wellenlängen erfolgt heutzutage üblicherweise dadurch, dass zwei Laserstrahlen mittels nebeneinander angeordneten Ablenkeinheiten zielgenau auf das zu bearbeitende Objekt gerichtet werden. Jede der Ablenkeinheiten weist üblicherweise zwei drehbar gelagerte Spiegel auf, so dass der auf das zu bearbeitende Objekt auftreffende Laserstrahl in einer x-y-Ebene positioniert werden kann. Die Anordnung der beiden Ablenkeinheiten hat den Nachteil, dass die beiden Laserstrahlen, sofern sie auf einen gemeinsamen Teilbereich des zu bearbeitenden Objekts gerichtet werden sollen, unter unterschiedlichen Winkeln auf die Bearbeitungsoberfläche auftreffen. Die unterschiedlichen Auftreffwinkel der beiden Laserstrahlen sind insbesondere für das Laserbohren von kleinen Löchern nachteilig, da aufgrund der unterschiedlichen Winkel der resultierende Durchmesser des gebohrten Loches mit zunehmender Lochtiefe insbesondere an der Oberkante des Lochs größer wird. Darüber hinaus werden bei großen Winkelabweichungen die Löcher schräg in das zu bearbeitende Objekt gebohrt. Damit ergibt sich beispielsweise bei Durchganglöchern für das Loch auf der einen Seite des Objekts eine andere Position als auf der gegenüberliegenden anderen Seite, so dass die Genauigkeit des gebohrten Lochs erheblich verschlechtert wird.

Aus der JP 2001 196 665 A ist eine Vorrichtung und ein Verfahren zum Bearbeiten von Objekten mittels Laserstrahlen bekannt, wobei zwei von unterschiedlichen Laseroszillatoren erzeugte Laserstrahlen unterschiedlicher Wellenlänge mittels eines dichroitischen Spiegels überlagert und nach dem Durchgang durch eine Sammellinse auf ein zu bearbeitenden Objekt gerichtet werden.

Aus der DE 199 10 880 A1 ist eine Vorrichtung zum Bearbeiten von Objekten mittels eines Laserstrahls bekannt, bei dem der bearbeitende Laserstrahl nach dem Durchgang durch eine Fokussieroptik von einer aus zwei Umlenkspiegeln bestehenden Ablenkeinheit auf ein zu bearbeitendes Objekt gelenkt wird. Zwischen der Ablenkeinheit und dem zu bearbeitenden Objekt ist eine Planfeldoptik angeordnet, so dass die auf das Objekt gerichteten Laserstrahlen unabhängig von der genauen Stellung der Ablenkeinheit mit einem gleichbleibenden Fokusdurchmesser auf das Objekt treffen.

Aus der JP 2000 190 087 A ist eine Laserbearbeitungsmaschine bekannt, bei der die Strahlengänge zweier unterschiedlich polarisierter Laserstrahlen mittels eines polarisationsabhängigen Spiegels kombiniert und nach dem Durchgang durch eine Planfeldoptik auf ein zu bearbeitendes Objekt gerichtet werden. Der Ort, an dem die beiden Laserstrahlen auf das zu bearbeitende Objekt auftreffen, wird von der Stellung von jeweils einer Ablenkeinheit bestimmt, die sich vor der Überlagerung der beiden Laserstrahlen in einem der beiden Strahlengänge befindet.

Der Erfindung liegt somit die Aufgabe zugrunde, eine Vorrichtung zum Bearbeiten von Objekten mittels Laserstrahlen zu schaffen, bei welcher zwei unterschiedliche Laserstrahlen unabhängig voneinander auf eine Objektoberfläche fokussierbar sind, wobei der jeweilige Fokusdurchmesser unabhängig vom genauen Auftreffort des jeweiligen Laserstrahls auf die Objektoberfläche ist.

Diese Aufgabe wird gelöst durch eine Vorrichtung zum Bearbeiten von Objekten mittels Laserstrahlen mit den Merkmalen des unabhängigen Anspruchs 1.

Der Erfindung liegt die Erkenntnis zugrunde, dass eine möglichst senkrechte Bearbeitung von Objekten mittels zwei unterschiedlichen Laserstrahlen dann möglich ist, wenn die Strahlengänge der beiden Laserstrahlen mittels eines teilweise reflektierenden optischen Elements zumindest annähernd zusammengeführt werden. Die erfindungsgemäße Vorrichtung hat den Vorteil, dass die beiden Ablenkeinheiten im Prinzip in einem beliebigen Abstand voneinander angeordnet werden können, ohne dass dies zu einer Verschlechterung der Strahlführung der beiden auf das Objekt gerichteten Laserstrahlen aufgrund von stark unterschiedlichen Auftreffwinkeln führt.

Die erfindungsgemäße Vorrichtung kann insbesondere dann vorteilhaft zum Laserbohren eingesetzt werden, wenn die beiden Laserstrahlen derart an dem teilweise reflektierenden optischen Element überlagert werden, dass deren Strahlengänge im wesentlichen koaxial auf das zu bearbeitende Objekt auftreffen. Auf diese Weise können bei einer genauen Leistungssteuerung der beiden Laserstrahlen sowohl Durchgangslöcher als auch sog. Sacklöcher schnell und mit hoher Präzision gebohrt werden.

Die erfindungsgemäße Vorrichtung kann aber auch dann vorteilhaft zum Laserbohren verwendet werden, wenn die zwei Laserstrahlen parallel mit einem bestimmten Versatz auf das zu bearbeitende Loch gelenkt werden. In diesem Fall können gleichzeitig zwei unterschiedliche Löcher gebohrt werden.

Der wichtigste Vorteil der erfindungsgemäßen Vorrichtung besteht darin, dass zur Bearbeitung eines Objekts zwei getrennte Laserstrahlen völlig unabhängig voneinander auf ein und dasselbe Bearbeitungsfeld gelenkt werden können. Dies eröffnet eine Vielzahl von Möglichkeiten um mit einer einzigen Bearbeitungsmaschine verschiedenartige Objekte präzise und schnell bearbeiten zu können.

Die Verwendung von Planfeldoptiken ermöglicht, dass die beiden Laserstrahlen innerhalb eines großen Bearbeitungsbereiches auf das zu bearbeitende Objekt gelenkt werden können, ohne dass sich die Strahlqualität aufgrund von unterschiedlichen Fokusbreiten ändert. Eine solche Änderung der Fokusbreiten tritt üblicherweise bei gewöhnlichen sog. sphärischen Linsen auf, bei welchen der Fokusbereich, d.h. der Bereich, bei dem bei verschiedenen Einfallswinkeln des Laserstrahls der Laserstrahl fokussiert wird, auf einer Kugeloberfläche liegt. Planfeldoptiken, welche auch als F-Theta-Objektive bezeichnet werden, zeichnen sich im Gegensatz zu den gewöhnlichen sphärischen Linsen dadurch aus, dass der Fokusbereich weitgehend unabhängig vom Einfallswinkel des auf die Planfeldoptik treffenden Lichtstrahls in einer Ebene liegt. Somit ermöglicht die Verwendung von Planfeldoptiken eine präzise Fokussierung der bearbeitenden Laserstrahlen innerhalb eines großen Bearbeitungsbereichs, so dass auch große Objekte ohne eine zwischenzeitliche Verschiebung und somit ohne Unterbrechung bearbeitet werden können.

Die Ausführungsform der Erfindung gemäß Anspruch 2, bei der die beiden Ablenkeinheiten senkrecht zueinander angeordnet sind, hat den Vorteil, dass bei einer Nullstellung der beiden Ablenkeinheiten die beiden Laserstrahlen senkrecht zueinander auf das teilweise reflektierende optische Element auftreffen. Dies erleichtert den Aufbau und insbesondere die optische Justierung einer entsprechenden Laserbearbeitungsvorrichtung, da bei einer Nullstellung der beiden Ablenkeinheiten die Laserstrahlen ausschließlich senkrecht oder parallel zu der Bearbeitungsoberfläche geführt werden können.

Gemäß Anspruch 3 weisen die beiden Laserstrahlen unterschiedliche Wellenlängen auf und als teilweise reflektierendes Element wird ein dichroitischer Spiegel verwendet. Die Verwendung eines dichroitischen Spiegels hat gegenüber der Verwendung von herkömmlichen halbdurchlässigen Spiegeln den Vorteil, dass, geeignete spektrale Reflexions- bzw. Transmissionseigenschaften des dichroitischen Spiegels vorrausgesetzt, die von den beiden unterschiedlichen Laserstrahlen bereitgestellte Leistung ohne größere Verluste für die Bearbeitung des zu bearbeitenden Objekts verwendet werden kann. Im Gegensatz dazu würde bei der Verwendung eines herkömmlichen halbdurchlässigen Spiegels sowohl eine unerwünschte Reflexion des transmittierten Laserstrahls als auch eine unerwünschte Transmission des reflektierten Laserstrahls auftreten. Die Intensitäten dieser unerwünschten Laserstrahlen hätten dann eine Verlustleistung zur Folge, welche die thermische Stabilisierung einer Laserbearbeitungsmaschine im Falle der Strahlzusammenführung mittels eines herkömmlichen halbdurchlässigen Spiegels erschweren würde. Somit erleichtert die Verwendung eines auf die Wellenlängen der beiden Laserstrahlen abgestimmten dichroitischen Spiegels aufgrund der Reduzierung der Verlustleistung die thermische Stabilisierung der Laserbearbeitungsmaschine und trägt dadurch zu einer zeitlich gleichbleibenden hohen Bearbeitungsgenauigkeit bei.

Gemäß Anspruch 4 wird zur Erzeugung des ersten Laserstrahls ein erster Laser und zur Erzeugung des zweiten Laserstrahls ein zweiter Laser verwendet.

Alternativ zu der Verwendung von zwei Laserlichtquellen können gemäß Anspruch 5 die beiden Laserstrahlen auch durch einen einzigen Laser erzeugt werden, wobei die spektrale Verteilung von zumindest einem der beiden Laserstrahlen durch eine sog. Frequenzkonversion verändert wird. Eine Frequenzkonversion, bei der die Frequenz des primären Laserstrahls erhöht wird, stellt beispielsweise eine Frequenzvervielfachung innerhalb eines optisch nichtlinearen Kristalls dar. Ebenso kann mittels einer Frequenzkonversion aber auch die Frequenz des primären Laserlichts verringert werden. Dies kann beispielsweise durch eine Frequenzmischung erfolgen, bei der zwei unterschiedliche Lichtstrahlen mit zueinander unterschiedlicher spektraler Verteilung in einem optisch nichtlinearen Kristall räumlich überlagert werden, so dass sowohl die Summenfrequenz als auch insbesondere die Differenzfrequenz zwischen den Frequenzen der beiden gemischten Lichtstrahlen erzeugt wird.

Eine effiziente Strahlzusammenführung ohne die Verlustleistungen von unerwünscht reflektierten bzw. unerwünscht transmittierten Laserstrahlen kann auch bei zwei Laserstrahlen mit gleichen Wellenlängen erreicht werden. Dazu wird gemäß Anspruch 6 ein polarisationsabhängiger Spiegel als teilweise reflektierendes optisches Element verwendet. Die effiziente Verwendung eines polarisationsabhängigen Reflektors setzt voraus, dass die Polarisationsrichtungen der beiden Laserstrahlen unterschiedlich, am besten senkrecht zueinander sind. Als polarisationsabhängige Spiegel können beispielsweise ein sog. Nikol'sches Prisma oder im Prinzip jedes andere optisch aktive Material verwendet werden, welches für unterschiedliche Polarisationsrichtungen jeweils unterschiedliche Brechungsindizes aufweist.

Die Polarisationsrichtung von auf dem polarisationsabhängigen Spiegel auftreffenden Lichtstrahlen kann durch einen optisch aktiven Kristall beeinflusst werden. So kann zum Beispiel ein zunächst in einer bestimmten Richtung linear polarisierter Lichtstrahl durch ein sog. λ/4-Plättchen um 90° gedreht werden. Als polarisationsrotierende Elemente können aber auch andere Materialien verwendet werden, deren optische Aktivität auf dem magnetooptischen Effekt (Faraday-Effekt) oder auf dem elektrooptischen Kerr- oder Pockelseffekt beruht. Ferner wird darauf hingewiesen, dass polarisierende optische Elemente, wie beispielsweise eine Polarisatorfolie oder auch ein Nikol-Prisma verwendet werden können, um aus einem zunächst unpolarisierten Lichtstrahl einen polarisierten Lichtstrahl zu erzeugen.

Weitere Vorteile und Merkmale der vorliegenden Erfindung ergeben sich aus der folgenden beispielhaften Beschreibung derzeit bevorzugter Ausführungsformen.

In der Zeichnung zeigen
- Figur 1: eine Laserbearbeitungsvorrichtung gemäß einem ersten Ausführungsbeispiel der Erfindung und
- Figur 2: eine Laserbearbeitungsvorrichtung gemäß einem zweiten Ausführungsbeispiel der Erfindung.

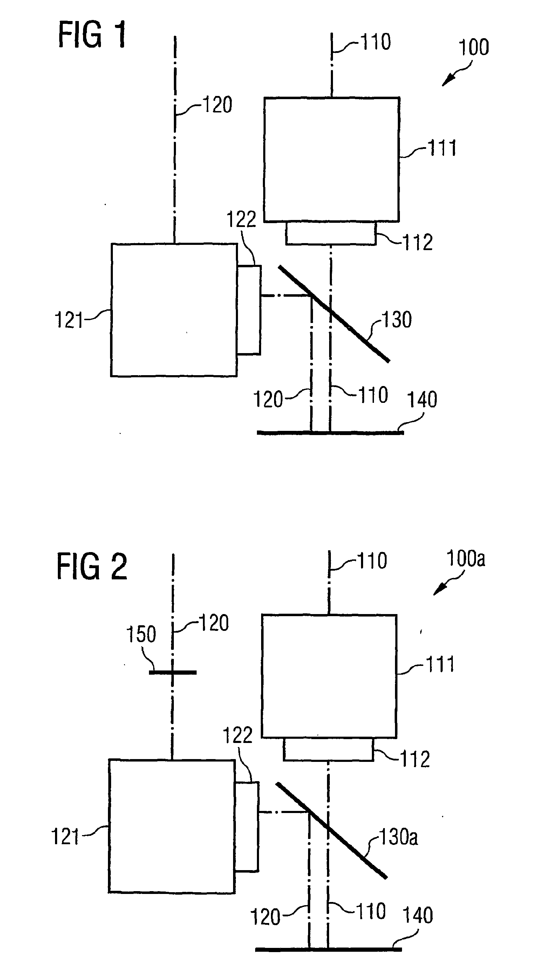

Figur 1 zeigt eine schematische Darstellung einer Laserbearbeitungsvorrichtung 100 gemäß einem ersten Ausführungsbeispiel der Erfindung. Die Laserbearbeitungsvorrichtung 100 erlaubt die Bearbeitung eines Objekts (nicht dargestellt) durch zwei Laserstrahlen mit zueinander unterschiedlicher spektraler Verteilung. Wie aus Figur 1 ersichtlich, wird der Strahlengang eines ersten Laserstrahls 110 mittels einer Ablenkeinheit 111 variiert. Die Ablenkeinheit 111 weist zumindest zwei gegeneinander verkippte Spiegel auf, welche mittels einer Steuereinheit (nicht dargestellt) derart bewegt werden können, dass der erste Laserstrahl 110 in einer Ebene senkrecht zu der Ausbreitung des ersten Laserstrahls 110 ausgelenkt wird. Entsprechend wird der Strahlengang eines zweiten Laserstrahls 120 mittels einer zweiten Ablenkeinheit 121 variiert, welche gemäß dem hier dargestellten Ausführungsbeispiel der Erfindung senkrecht zu der ersten Ablenkeinheit 111 angeordnet ist. Ebenso wie die erste Ablenkeinheit 111 weist die zweite Ablenkeinheit 121 zwei gegeneinander verkippte Spiegel auf, die den Strahlengang des zweiten Laserstrahls 120 entsprechend der Ansteuerung der Ablenkeinheit 121 durch eine nicht dargestellte Steuereinheit manipuliert.

Die zweite Ablenkeinheit 121 weist gegenüber der ersten Ablenkeinheit 111 zusätzlich einen weiteren Reflektor auf, so dass bei einer parallelen Ausrichtung der primär auf die beiden Ablenkeinheiten einfallenden Laserstrahlen 110 und 120 die Strahlengänge der von den beiden Ablenkeinheiten austretenden Laserstrahlen bevorzugt in einem Winkel von 90° zueinander verlaufen. Alternativ zu einem weiteren Reflektor kann auch die Nullstellung von zumindest einem der beiden Spiegel der zweiten Ablenkeinheit 121 gegenüber den Spiegeln der ersten Ablenkeinheit 111 entsprechend verstellt sein. Als weitere aufgrund der Verwendung von baugleichen Komponenten besonders bevorzugte Alternative kann als zweite Ablenkeinheit 121 eine der ersten Ablenkeinheit 111 identische Ablenkeinheit ohne zusätzlichen Reflektor verwendet werden. In diesem Fall müsste der auf die Ablenkeinheit 121 auftreffende Laserstrahl 120 senkrecht zu dem ersten Laserstrahl 110 ausgerichtet sein. Dies kann auf einfache Weise mit einem zusätzlichen Reflektor realisiert werden, welcher den auf die Ablenkeinheit 121 treffenden Laserstrahl 120 bevorzugt um 90° ablenkt.

In dem Strahlengang 110 bzw. 120 befindet sich ferner eine Planfeldoptik 112 bzw. 122, welche in unmittelbarer Nähe der Ablenkeinheit 111 bzw. 121 angeordnet ist. Die Strahlenzusammenführung der beiden Laserstrahlen 110 und 120 erfolgt mittels eines dichroitischen Spiegels 130. Der dichroitische Spiegel 130 zeichnet sich durch einen hohen Transmissionskoeffizienten für das Licht des ersten Laserstrahls 110 und durch einen hohen Reflexionskoeffizienten für das Licht des zweiten Laserstrahls 120 aus. Der durch den dichroitischen Spiegel 130 transmittierte erste Laserstrahl 110 und der von dem dichroitischen Spiegel 130 reflektierte zweite Laserstrahl 120 werden bei geeigneter Wahl der Brennweiten der beiden Planfeldoptiken 112 und 122 auf die Bearbeitungsebene 140 fokussiert.

Es wird darauf hingewiesen, dass die spektralen Reflexions- bzw. Transmissionseigenschaften des dichroitischen Spiegels 130 sorgfältig auf die Wellenlängen der beiden Laserstrahlen 110 und 120 abgestimmt werden sollten. Eine effiziente Strahlenzusammenführung ohne große Verluste durch unerwünscht transmittiertes Licht des zweiten Laserstrahls 120 und unerwünscht reflektiertes Licht des ersten Laserstrahls 110 kann insbesondere dann erreicht werden, wenn die Differenz der Wellenlängen der beiden Laserstrahlen 110 und 120 so groß ist, dass der dichroitische Spiegel 130 für den Laserstrahl 110 einen Transmissionskoeffizienten von möglichst nahe bei 100% und für den Laserstrahl 120 einen Reflexionskoeffizienten von möglichst nahe bei 100% aufweist. In Verbindung mit Nd:YAG-, Nd:YVO₄-, Nd:YLF-, Excimer-Lasern und Co₂-Lasern eignen sich insbesondere die Wellenlängenkombinationen 355 nm und 532 nm, 355 nm und 1064 nm, 532 nm und 1064 nm, 355 nm und 9,2 µm bis 10,6 µm sowie 532 nm und 9,2 µm bis 10,6 µm.

In die Strahlengänge der beiden Laserstrahlen 110 und 120 können außerdem in Figur 1 nicht dargestellte herkömmliche sog. Strahlaufweiter eingebracht werden können, so dass die beiden Laserstrahlen 110 und 120 mit unterschiedlicher Fokusbreite auf die Bearbeitungsebene 140 abgebildet werden können. Diese Strahlaufweiter können ferner für eine Feinjustage der beiden Laserstrahlen 110 und 120 verwendet werden. Durch Verstellen der Strahlaufweiter kann außerdem die Fokusebene des entsprechenden Laserstrahls verstellt werden, so dass eine Laserbearbeitung in unterschiedlichen Ebenen möglich ist.

Das Verändern der Fokusebene kann außerdem dazu verändert werden, um ein zuvor gebohrtes Loch von störenden Materialspuren zu befreien. Solche Materialspuren sind beispielsweise durch das Bohren entstandene Grate oder in dem gebohrten Loch befindliche Späne. Bei einem derartigen Reinigungsprozess wird die Fokusverschiebung gerade so groß gewählt, dass die resultierende Strahlintensität in dem gebohrten Loch gerade so stark ist, dass einerseits die störenden Materialspuren möglichst vollständig entfernt werden und andererseits der Materialabtrag an der Leiterplatte so klein ist, dass die Geometrie des zuvor gebohrten Lochs nicht verändert wird.

Ferner wird darauf hingewiesen, dass bei der Transmission des ersten Laserstrahls 110 durch den dichroitischen Spiegel 130 ein Strahlversatz auftritt, dessen Größe von dem Brechungsindex des Spiegelsubstrats, von dessen Dicke und insbesondere von dem Winkel abhängt, unter dem der erste Laserstrahl 110 auf den dichroitischen Spiegel 130 auftrifft. Durch die Verwendung der telezentrischen Planfeldoptik 112 wird die Winkelabhängigkeit des Strahlversatzes erheblich reduziert.

Eine hohe Präzision der Laserbearbeitungsvorrichtung 100 wird durch eine regelmäßige Kalibrierung gewährleistet, welche für die beiden Laserstrahlen 110 und 120 unabhängig voneinander durchgeführt wird. Dabei wird jeweils sowohl die Soll-Position, an welcher der jeweilige Laserstrahl auf ein Objekt treffen soll, als auch die Ist-Position, an welcher der jeweilige Laserstrahl auf das Objekt trifft, mit einer Bilderfassungsvorrichtung erfasst. Die Abweichung der Soll-Position von der Ist-Position wird in einer sog. Verzerrungstabelle gespeichert. Diese wird für die nachfolgende Ansteuerung der jeweiligen Ablenkeinheit derart berücksichtigt, dass innerhalb des gesamten Arbeitsbereiches die zuvor ermittelten Abweichungen zwischen Soll-Position und Ist-Position möglichst kompensiert werden.

Figur 2 zeigt eine Laserbearbeitungsvorrichtung 100a gemäß einem zweiten Ausführungsbeispiel der Erfindung. Die Laserbearbeitungsvorrichtung 100a ermöglicht eine Strahlenzusammenführung des ersten Laserstrahls 110 mit dem zweiten Laserstrahl 120, wobei die spektrale Verteilung der beiden Laserstrahlen 110 und 120 sowohl unterschiedlich als auch gleich sein kann. Die Laserbearbeitungsvorrichtung 100a unterscheidet sich von der Laserbearbeitungsvorrichtung 100 in dem teilweise reflektierenden optischen Element, welches bei der Laserbearbeitungsvorrichtung 100a ein polarisationsabhängiger Spiegel 130a ist. Eine effiziente Strahlzusammenführung ohne eine hohe unerwünschte transmittierte Lichtintensität des zweiten Laserstrahls 120 und ohne eine hohe unerwünschte reflektierte Lichtintensität des Laserstrahls 110 wird am besten dadurch erreicht, dass die Polarisationsrichtungen der auf dem polarisatiönsabhängigen Spiegel 130a auftreffenden Laserstrahlen 110 und 120 möglichst unterschiedlich sind.

Dies wird gemäß dem in Figur 2 dargestellten Ausführungsbeispiel der Erfindung durch einen sog. Polarisationsrotator 150 gewährleistet, welcher die Polarisationsrichtung bzw. die Art der Polarisation des zweiten Laserstrahls 120 verändert. Die Verwendung des Polarisationsrotators 150 eignet sich insbesondere dann, wenn die beiden Laserstrahlen 110 und 120 von ein und demselben Laser über eine herkömmliche Strahlteilung generiert werden oder wenn die beiden Laserlichtquellen derart montiert sind, dass die jeweiligen Polarisationsrichtungen der beiden ausgesandten Laserstrahlen 110 und 120 gleich sind.

Es wird darauf hingewiesen, dass die unterschiedliche Polarisation der beiden Laserstrahlen 110 und 120 auch ohne die Verwendung eines Polarisationsrotators 150 erreicht werden kann, indem die beiden die beiden Laserstrahlen 110 und 120 erzeugenden Laserlichtquellen in unterschiedlichen räumlichen Orientierungen angeordnet werden.

Die Kalibrierung der Laserbearbeitungsvorrichtung 100a erfolgt auf die gleiche Art wie die Kalibrierung der oben anhand von Figur 1 beschriebene Laserbearbeitungsvorrichtung 100.

Zusammenfassend schafft die Erfindung eine Laserbearbeitungsvorrichtung 100, mit der in einem einzigen Bearbeitungsprozess zwei voneinander unabhängige Laserstrahlen 110, 120 auf das gleiche Bearbeitungsfeld gelenkt werden können. Dies wird ermöglicht durch die Verwendung eines zumindest teilweise reflektierenden optischen Elements 130, welches derart ausgebildet ist, dass der erste Laserstrahl 110 im wesentlichen transmittiert wird und der zweite Laserstrahl 120 im wesentlichen reflektiert wird. Die Strahlengänge der beiden Laserstrahlen 110 und 120 werden vor dem Auftreffen auf das zumindest teilweise reflektierende optische Element 130 unabhängig voneinander durch zwei Ablenkeinheiten 111 und 121 variiert. Damit ergeben sich insbesondere folgende vorteilhafte Möglichkeiten für eine Materialbearbeitung:
- Man kann auf ein und demselben Bearbeitungsfeld mit zwei individuell ablenkbaren Laserstrahlen arbeiten.
- Bei der Verwendung von Laserstrahlen mit derselben Wellenlänge kann man durch die gleichzeitige Bearbeitung von zwei nebeneinander angeordneten unterschiedlichen Strukturen eine doppelte Bearbeitungsgeschwindigkeit erreichen.
- Bei der Verwendung von gepulsten Laserstrahlen kann man durch eine koaxiale Überlagerung der beiden Laserstrahlen durch einen zeitlichen Versatz der Pulsfolgen der beiden Laserstrahlen die Materialbearbeitung mit der doppelten Pulsfrequenz durchführen. Dies ist insbesondere beim Bohren von Löchern vorteilhaft.
- Man kann Laserstrahlen mit voneinander unterschiedlichen Wellenlängen koaxial überlagern und somit in einem Schritt nahezu gleichzeitig an der selben Stelle zwei Bearbeitungsschritte durchführen. Dies ist insbesondere dann vorteilhaft, wenn in den beiden Bearbeitungsschritten jeweils unterschiedliche Materialien abzutragen sind, die in dem zu bearbeitenden Objekt übereinander angeordnet sind.

## Patentansprüche

1. Vorrichtung zum Bearbeiten von Objekten mittels Laserstrahlen, mit
• einer ersten Ablenkeinheit (111), welche einen ersten Laserstrahl (110) auf ein teilweise reflektierendes Element (130) lenkt, und
• einer zweiten Ablenkeinheit (121), welche einen zweiten Laserstrahl (120) auf das teilweise reflektierende Element (130) lenkt,
wobei das teilweise reflektierende optische Element (130) derart ausgebildet ist, dass es den ersten Laserstrahl (110) im wesentlichen transmittiert und den zweiten Laserstrahl (120) im wesentlichen reflektiert und **dadurch gekennzeichnet dass** der ersten Ablenkeinheit (111) eine erste Planfeldoptik (112), und der zweiten Ablenkeinheit (121) eine zweite Planfeldoptik (122) nachgeordnet sind, und, dass das teilweise reflektierende optische Element (30) relativ zu einem zu bearbeitenden Objekt derart angeordnet werden kann, dass die beiden Laserstrahlen (110, 120) unmittelbar nach der Transmission bzw. nach der Reflektion auf das zu bearbeitende Objekt treffen.

2. Vorrichtung gemäß Anspruch 1, bei der die beiden Ablenkeinheiten (111, 121) senkrecht zueinander angeordnet sind.

3. Vorrichtung gemäß einem der Ansprüche 1 bis 2, bei der
• die spektrale Verteilung des ersten Laserstrahls (110) eine erste Wellenlänge aufweist,
• die spektrale Verteilung des zweiten Laserstrahls (120) eine zweite Wellenlänge aufweist, welche gegenüber der ersten Wellenlänge unterschiedlich ist, und
• das teilweise reflektierende Element (130) ein dichroitischer Spiegel ist.

4. Vorrichtung gemäß Anspruch 3, zusätzlich mit
• einem ersten Laser, welcher den ersten Laserstrahl (110) generiert, und
• einem zweiten Laser, welcher den zweiten Laserstrahl (120) generiert.

5. Vorrichtung gemäß Anspruch 3, bei der ein Laser vorgesehen ist,
• welcher direkt oder indirekt über eine Frequenzkonversion den ersten Laserstrahl (110) generiert und
• welcher indirekt über eine Frequenzkonversion den zweiten Laserstrahl (120) generiert.

6. Vorrichtung gemäß einem der Ansprüche 1 bis 2, bei der
• das teilweise reflektierende optische Element (130) ein polarisationsabhängiger Spiegel ist, dessen Reflexionsvermögen von der Polarisation des auf den polarisationsabhängigen Spiegel treffenden Lichts abhängt, und
• die Polarisationsrichtung des auf den polarisationsabhängiger Spiegel treffenden ersten Laserstrahls (110) im wesentlichen senkrecht zu der Polarisationsrichtung des auf den polarisationsabhängigen Spiegel treffenden zweiten Laserstrahls (120) ist.

7. Vorrichtung gemäß Anspruch 6, bei der ein Polarisationsrotator (150) vorgesehen ist, welcher die Polarisationsrichtung des auf den polarisationsabhängigen Spiegel treffenden zweiten Laserstrahls (120) verändert.

## Claims

1. Device for machining objects using laser beams, comprising
- a first deflection unit (111), which directs a first laser beam (110) onto a partially reflecting element (130), and
- a second deflection unit (121), which directs a second laser beam (120) onto the partially reflecting element (130),
wherein the partially reflecting optical element (130) is configured such that it essentially transmits the first laser beam (110) and it essentially reflects the second laser beam (120),
**characterised in that**
after the first deflection unit (111) a first plane field optic (112) and after the second deflection unit (121) a second plane field optic (122) are arranged and
the partially reflecting optical element (130) can be arranged in such a way relative to an object to be machined, that the two laser beams (110, 120) directly strike onto the object to be machined after the transmission and after the reflection, respectively.

2. Device according to claim 1, wherein the two deflection units (111, 121) are arranged perpendicular to each other.

3. Device according to claims 1 to 2, wherein
- the spectral distribution of a first laser beam (110) includes a first wavelength,
- the spectral distribution of the second laser beam (120) includes a second wavelength, different from the first wavelength, and
- the partially reflecting element (130) is a dichroic mirror.

4. Device according claim 3, additionally with
- a first laser, which generates the first laser beam (110), and
- a second laser, which generates the second laser beam (120).

5. Device according to claim 3, wherein a laser is provided,
- which directly or indirectly generates the first laser beam (110) by way of a frequency conversion and
- which indirectly generates the second laser beam (120) by way of a frequency conversion.

6. Device according to one of claims 1 to 2, wherein
- the partially reflecting optical element (130) is a polarisation-depending mirror, the reflection ability of which depends on the polarisation of the light striking the polarisation-depending mirror, and
- the direction of the polarisation of the first laser beam (110) striking the polarisation-depending mirror is essentially perpendicular to the direction of the polarisation of the second laser beam (120) striking the polarisation-depending mirror.

7. Device according to claim 6, wherein a polarisation rotator (150) is arranged, which changes the polarisation direction of the second laser beam (120) striking onto the polarisation-depending mirror.

## Revendications

1. Dispositif pour l'usinage laser d'objets au moyen de faisceaux laser, comprenant :
• une première unité de dérivation (111), dérivant un premier faisceau laser (110) vers un élément partiellement réfléchissant (130), et
• une deuxième unité de dérivation (121), dérivant un deuxième faisceau laser (120) vers l'élément partiellement réfléchissant (130),
l'élément optique partiellement réfléchissant (130) étant réalisé de manière à transmettre l'essentiel du premier faisceau laser (110) et à réfléchir l'essentiel du deuxième faisceau laser (120), et
**caractérisé en ce**
**qu'**une première optique de champ plan (112) est disposée en aval de la première unité de dérivation (111), et une deuxième optique de champ plan (122) en aval de la deuxième unité de dérivation (121), et
l'élément optique partiellement réfléchissant (130) peut être disposé relativement à un objet à usiner de telle manière que les deux faisceaux laser (110, 120) touchent l'objet à usiner immédiatement après la transmission ou après la réflexion.

2. Dispositif selon la revendication 1, dans lequel les deux unités de dérivation (111, 121) sont disposées perpendiculairement l'une par rapport à l'autre.

3. Dispositif selon l'une des revendications 1 et 2, dans lequel
• la répartition spectrale du premier faisceau laser (110) présente une première longueur d'onde,
• la répartition spectrale du deuxième faisceau laser (120) présente une deuxième longueur d'onde, différente de la première longueur d'onde, et
• l'élément optique partiellement réfléchissant (130) est un miroir dichroïte.

4. Dispositif selon la revendication 3, comprenant en outre
• un premier laser, générant le premier faisceau laser (110), et
• un deuxième laser, générant le deuxième faisceau laser (120).

5. Dispositif selon la revendication 3, dans lequel un laser est prévu
• générant le premier faisceau laser (110) directement ou indirectement par conversion de fréquence, et
• générant indirectement le deuxième faisceau laser (120) par conversion de fréquence.

6. Dispositif selon l'une des revendications 1 et 2, dans lequel
• l'élément optique partiellement réfléchissant (130) est un miroir dépendant de la polarisation, dont le facteur de réflexion dépend de la polarisation de la lumière incidente sur le miroir dépendant de la polarisation, et où
• la direction de polarisation du premier faisceau laser (110) incident sur le miroir dépendant de la polarisation est sensiblement perpendiculaire à la direction de polarisation du deuxième faisceau laser (120) incident sur le miroir dépendant de la polarisation.

7. Dispositif selon la revendication 6, dans lequel un rotateur de polarisation (150) est prévu, lequel modifie la direction de polarisation du deuxième faisceau laser (120) incident sur le miroir dépendant de la polarisation.
